# FASCICULE DE BREVET EUROPEEN

(11) **EP 0 926 461 B1**
(45) Date de publication et mention de la délivrance du brevet: **11.09.2002**
(21) Numéro de dépôt: 98403121.1
(22) Date de dépôt: 10.12.1998
(51) Int. Cl.: F42B 3/12, B60R 21/00, B60R 21/26

(54) **Initiateur électro-pyrotechnique à trois connexions électriques**
Elektro-pyrotechnischer Anzünder mit drei elektrischen Anschlüssen
Electro-pyrotechnic initiator having three electrical connectors

(30) Priorité: 22.12.1997 FR 9716217
(43) Date de publication de la demande: 30.06.1999
(73) Titulaire: LIVBAG S.N.C., 91710 Vert Le Petit (FR)
(72) Inventeur: Haegeman, Christophe, 91120 Palaiseau (FR); Perotto, Christian, 91610 Ballancourt (FR)
(74) Mandataire: Pech, Bernard

(56) Documents cités:
- EP-A- 0 119 458
- WO-A-97/16695
- FR-A- 2 704 944
- US-A- 2 386 211

## Description

La présente invention se rapporte au domaine des initiateurs pyrotechniques et concerne plus particulièrement un initiateur électro-pyrotechnique destiné à la sécurité automobile.

Les initiateurs électro-pyrotechniques sont traditionnellement constitués à partir de deux broches conductrices de l'électricité qui sont maintenues par un surmoulage en matière isolante et dont les extrémités supérieures sont reliées entre elles par un filament résistif chauffant qui est enserré dans une perle d'allumage et dont les extrémités inférieures sont connectées à une source de courant électrique.

De tels initiateurs électro-pyrotechniques sont largement utilisés pour constituer les dispositifs d'allumage des générateurs pyrotechniques de gaz destinés à gonfler des coussins de protection pour occupants d'un véhicule automobile. Mais, les dispositifs d'allumage des générateurs pyrotechniques adaptatifs et/ou progressifs de gaz, c'est-à-dire des générateurs qui, lorsqu'ils sont couplés à des systèmes de détection appropriés, permettent d'adapter le débit et/ou le volume de gaz en fonction de différents paramètres comme par exemple la nature et l'intensité du choc, sont généralement constitués par plusieurs initiateurs qui nécessitent chacun une alimentation électrique particulière, ce qui augmente considérablement les coûts et les encombrements.

La demande de brevet WO 97/16695, qui concerne un générateur pyrotechnique adaptatif de gaz comportant deux chambres de combustion indépendantes, divulgue un initiateur à double tête d'allumage et à une seule prise électrique qui permet justement de réduire les coûts et les encombrements. Selon un premier mode de réalisation de cet initiateur, ce dernier présente deux résistances distinctes incorporées à un pont de commutation comprenant quatre interrupteurs pouvant basculer par couple et combinés à un circuit d'aiguillage réalisé par un circuit à diodes. Selon un second mode de réalisation de cet initiateur, ce dernier comporte deux résistances différentes montées en parallèle dans un circuit électrique. Cependant, les constructeurs automobiles souhaitent pouvoir, par souci de sécurité, contrôler à tout moment la valeur de chaque résistance incluse dans l'initiateur par envois successifs de courants électriques tests générés à l'aide d'un boîtier électronique de commande. Mais, du fait, dans le premier mode de réalisation de l'initiateur, que la tension de jonction des diodes utilisées est trop importante et dépend de la température, il est impossible de mesurer la valeur des deux résistances de façon fiable. Dans le second mode de réalisation de l'initiateur, pour pouvoir tester chacune des deux résistances, il est alors nécessaire, du fait que ces résistances sont différentes, de faire varier l'intensité du courant électrique délivré par le boîtier électronique de commande. Ceci est relativement complexe à réaliser, et de plus, l'emploi de deux résistances différentes augmente le nombre d'étapes nécessaires à l'assemblage de l'initiateur et donc les coûts de fabrication.

Enfin, le brevet US 2,386,211, qui constitue l'état de la technique le plus proche, décrit un initiateur comprenant deux têtes d'allumage, chacune d'elles comportant deux connexions électriques qui sont reliées à un dispositif de déclenchement au moyen d'une prise électrique distincte.

L'homme du métier est ainsi toujours à la recherche d'un initiateur électro-pyrotechnique, destiné à être incorporé dans un générateur pyrotechnique adaptatif et/ou progressif de gaz utilisé en sécurité automobile pour protéger un occupant, peu onéreux, peu encombrant et offrant la possibilité de tester à tout moment les éléments résistifs chauffants constitutifs de l'initiateur et donc permettant de s'assurer de la fiabilité électrique de ce dernier.
L'invention a donc pour but de répondre à ce besoin et concerne un initiateur électro-pyrotechnique qui est destiné à être incorporé dans un générateur pyrotechnique adaptatif et/ou progressif de gaz utilisé en sécurité automobile pour protéger un occupant et qui comporte deux têtes d'allumage, caractérisé en ce que,
**i)** chacune des deux têtes d'allumage renferme une charge thermosensible et un élément résistif chauffant,
**ii)** les deux éléments résistifs chauffants sont incorporés dans un circuit électrique qui comporte trois connexions électriques, l'une étant commune aux deux éléments résistifs chauffants et les deux autres étant chacune reliées à un seul des deux éléments résistifs chauffants,
**iii)** les trois connexions électriques sont connectées à un moyen d'alimentation électrique provenant d'un boîtier de commande.

Ainsi, les trois connexions électriques de l'initiateur sont chacune reliées, par l'intermédiaire du moyen d'alimentation électrique, à un boîtier de commande tout à fait classique et donc bien connu de l'homme du métier. En fait, chacune des trois connexions électriques est connectée à une voie électrique distincte qui est incluse dans le boîtier de commande et qui comporte un interrupteur pouvant être successivement ouvert ou fermé. Il en découle alors que :
- En fonctionnement, le boîtier de commande envoie un ordre de mise à feu sous forme de signal électrique en fermant :
   - d'une part, l'interrupteur de la voie électrique du boîtier de commande qui est connectée à la connexion électrique de l'initiateur commune aux deux éléments résistifs chauffants, si cet interrupteur n'était pas antérieurement fermé,
   - et d'autre part, l'un des deux ou les deux interrupteurs relatifs aux deux autres voies électriques du boîtier de commande. Par conséquent, selon que ces deux derniers interrupteurs sont ouverts ou fermés, il est possible d'initier soit une seule tête d'allumage au choix, soit les deux têtes d'allumage simultanément ou successivement. En effet, le signal électrique, qui peut être constitué par une décharge de capacité ou par un créneau de courant régulé, permet alors de chauffer par effet Joule le ou les éléments résistifs chauffants choisis qui eux-mêmes provoquent l'inflammation de la charge thermosensible qui leur correspond.
- En mode de non-activation pyrotechnique de l'initiateur, le boîtier de commande envoie des signaux électriques tests successifs beaucoup plus faibles qui permettent de tester les deux éléments résistifs chauffants. Chacun de ces signaux électriques test est obtenu par sécurité en fermant:
   - d'une part, l'interrupteur de la voie électrique du boîtier de commande qui est connectée à la connexion électrique de l'initiateur commune aux deux éléments résistifs chauffants,
   - et d'autre part, l'interrupteur de la voie électrique du boîtier de commande qui est connectée à la connexion électrique de l'initiateur reliée à l'élément résistif chauffant que l'on veut tester.

De plus, cet initiateur électro-pyrotechnique, qui a été décrit ci-dessus par souci de simplicité comme ne comportant que deux têtes d'allumage, peut être généralisé à un initiateur électro-pyrotechnique comportant au moins deux têtes d'allumage, caractérisé en ce que,
i) chacune desdites têtes d'allumage renferme une charge thermosensible et un élément résistif chauffant,
ii) les éléments résistifs chauffants sont incorporés dans un circuit électrique qui comporte au moins trois connexions électriques, l'une étant commune aux éléments résistifs chauffants et les autres étant chacune reliées à un seul des éléments résistifs chauffants,
iii) les connexions électriques sont reliées à un moyen d'alimentation électrique provenant d'un boîtier de commande.

Ainsi, si cet initiateur présente, par exemple, trois têtes d'allumage renfermant chacune une charge thermosensible et un élément résistif chauffant, il faut alors incorporer ces trois éléments résistifs chauffants dans un circuit électrique comportant quatre connexions électriques, l'une étant commune aux trois éléments résistifs chauffants et les trois autres étant chacune reliées à un seul des trois éléments résistifs chauffants. Le fonctionnement de cet initiateur reste par ailleurs équivalent à celui décrit précédemment.

Selon une première variante de l'invention, chacune des trois connexions électriques est constituée par une broche.

Préférentiellement, le moyen d'alimentation électrique est constitué par un câble électrique contenant trois fils de liaison, chacune des trois broches étant connectée à l'un des trois fils de liaison. De façon avantageuse, les trois fils de liaison sont insérés dans une pièce intermédiaire venant s'emboîter dans les trois broches.

Selon une autre caractéristique de l'invention, les deux éléments résistifs chauffants sont reliés électriquement aux broches par l'intermédiaire d'un moyen de transmission.

Selon un premier mode de réalisation préférée de l'invention,
**i)** chacune des trois broches se décompose en un tronçon métallique plein et en un tronçon métallique creux,
**ii)** un surmoulage enrobe partiellement les trois broches,
**iii)** l'élément résistif chauffant contenu dans chacune des deux têtes d'allumage est relié électriquement, par l'intermédiaire de deux tiges métalliques conductrices qui prolongent ladite tête d'allumage, au tronçon métallique creux de la broche commune aux deux éléments résistifs chauffants et au tronçon métallique creux de l'une des deux autres broches.

Ainsi, dans ce mode de réalisation préférée de l'invention, le moyen de transmission est constitué par les deux tiges métalliques conductrices prolongeant chacune des deux têtes d'allumage, ces dernières étant préconstituées et restant amovibles. De plus, les têtes d'allumage standards qui existent actuellement peuvent être utilisées.

Selon un second mode de réalisation préférée de l'invention :
**i)** le circuit électrique est intégré dans un circuit de trois bandes conductrices qui sont formées sur un support de circuit imprimé, chacune des trois bandes conductrices étant connectée à l'une des trois broches,
**ii)** les deux éléments résistifs chauffants sont fixés dans le support de circuit imprimé de façon à ce que l'une desdites trois bandes conductrices soit commune aux deux éléments résistifs chauffants et de façon à ce que les deux autres bandes conductrices soient chacune reliées à un seul des deux éléments résistifs chauffants,
**iii)** chacun des deux éléments résistifs chauffants est recouvert par la charge thermosensible qui lui correspond et qui est elle-même contenue dans un capuchon fragmentable,
**iv)** les deux capuchons fragmentables sont solidarisés à un surmoulage qui enrobe partiellement les trois broches et le support de circuit imprimé.

Ainsi, dans ce mode de réalisation préférée de l'invention, le moyen de transmission est constitué par le circuit comprenant trois bandes conductrices qui sont formées sur le support de circuit imprimé.

Préférentiellement, le circuit électrique est partiellement recouvert par une couche de vernis isolant.

Selon une variante de l'invention, chacune des trois connexions électriques est constituée par un fil électrique. Chacun de ces trois fils électriques peut alors présenter, d'une part, une première extrémité reliée par exemple à l'un des trois fils de liaison contenus dans un câble électrique provenant du boîtier de commande, et d'autre part, une seconde extrémité connectée, comme précédemment, à un élément métallique creux inclus dans un surmoulage ou encore à un support de circuit imprimé sur lequel sont formées trois bandes conductrices.

Les principaux avantages de cet initiateur électro-pyrotechnique par rapport à ceux existant sont les suivants :
- L'utilisation d'un tel initiateur dans un générateur pyrotechnique adaptatif et/ou progressif de gaz approprié permet de réduire à la fois les coûts et les encombrements, d'une part, en raison de l'emploi d'une unique alimentation électrique, par exemple réalisée à l'aide d'un câble électrique renfermant trois fils de liaison, au lieu de deux alimentations électriques, et d'autre part, en raison de l'emploi d'éléments résistifs chauffants identiques permettant de réduire le nombre d'étapes nécessaires à l'assemblage de l'initiateur.
- Cet initiateur offre la possibilité d'être relié à un boîtier électronique de commande déjà existant et bien connu de l'homme du métier. Il suffit pour cela de connecter chacune des trois connexions électriques de l'initiateur à une voie électrique distincte et indépendante dudit boîtier électronique de commande. De plus, il est particulièrement avantageux de raccorder deux générateurs contenant chacun un tel initiateur à un même boîtier électronique de commande. En effet, ce montage ne nécessite alors que trois couples de voie électrique au lieu de quatre, ce qui est le cas lorsque l'on utilise deux générateurs contenant chacun deux initiateurs à alimentations électriques séparées.

On décrit ci-après les deux modes de réalisation préférée de l'invention en se référant aux figures 1 à 10.

La figure **1** est une vue en perspective d'un initiateur électro-pyrotechnique selon le premier mode de réalisation préférée de l'invention.

La figure **2** est une vue en perspective du surmoulage enrobant les trois broches de l'initiateur représenté à la figure 1.

La figure **3** est une vue arrière en coupe selon le plan III-III contenant les broches indépendantes du surmoulage enrobant les trois broches représenté à la figure 2.

La figure **4** est une vue de face, coupée selon IV-IV, d'un autre initiateur électro-pyrotechnique selon le premier mode de réalisation préférée de l'invention.

La figure **5** est une vue de dessous, coupée selon V-V, de l'initiateur représenté à la figure 4.

La figure **6** est une vue en perspective d'un initiateur électro-pyrotechnique selon le second mode de réalisation préférée de l'invention.

La figure **7** est une vue en coupe selon le plan médian VII-VII de l'initiateur représenté à la figure 6.

La figure **8** est une vue de face, coupée selon VIII-VIII, d'un autre initiateur électro-pyrotechnique selon le second mode de réalisation préférée de l'invention.

La figure **9** est une vue de dessous, coupée selon IX-IX, de l'initiateur représenté à la figure 8.

La figure **10** est une vue de dessous en perspective du support de circuit imprimé ainsi que des trois bandes conductrices, des trois broches et des deux éléments résistifs chauffants qui sont inclus dans les initiateurs représentés aux figures 6 à 9.

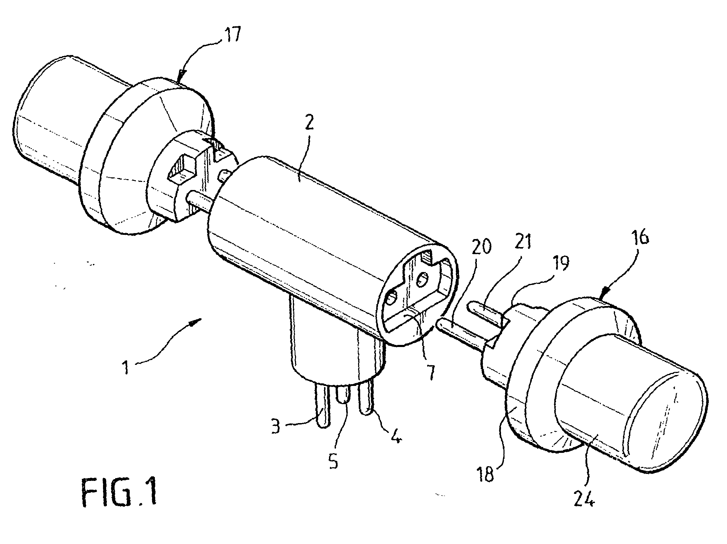

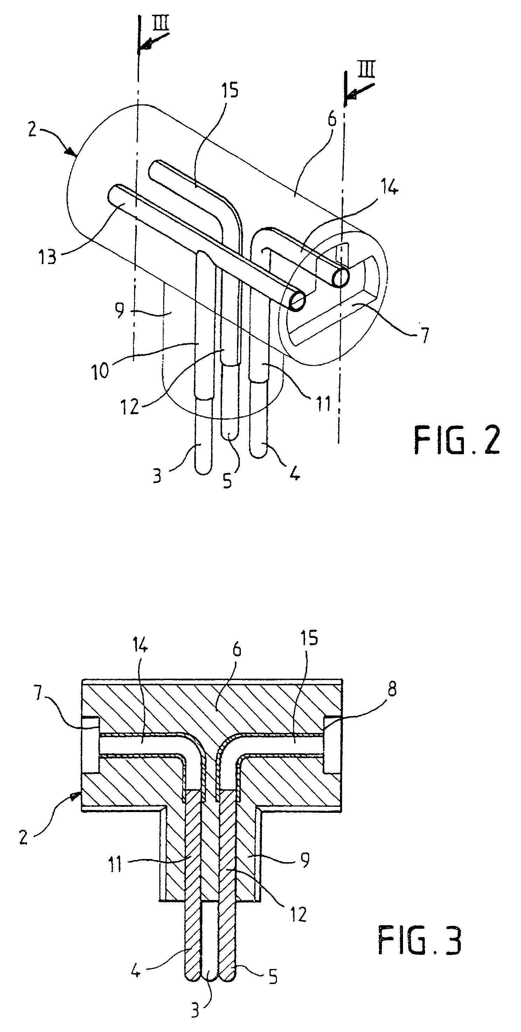

En se reportant aux figures 1 à 3, on observe qu'un initiateur 1 électro-pyrotechnique selon le premier mode de réalisation préférée est constitué à partir d'un surmoulage 2 monobloc en résine adhésive à base de polyamide thermofusible qui enrobe partiellement trois broches 3 à 5 constituant les trois connexions électriques dudit initiateur 1. Plus précisément, le surmoulage 2 présente, d'une part, une partie cylindrique allongée 6 comportant un renfoncement 7,8 à chacune de ses extrémités, et d'autre part, un décrochement externe cylindrique 9. Chacune des trois broches 3 à 5 se décompose respectivement en un tronçon métallique plein 10 à 12 et en un tronçon métallique creux 13 à 15. Dans le cas où ces tronçons sont des éléments distincts, chacun des deux éléments métalliques pleins 11 et 12 présente une extrémité supérieure soudée à une première extrémité de l'élément métallique creux 14, 15 qui lui correspond, et l'élément métallique plein 10 présente une extrémité supérieure soudée au corps de l'élément métallique creux 13. L'extrémité inférieure de chacun des trois éléments métalliques pleins 10 à 12, non incluse dans le décrochement externe cylindrique 9 du surmoulage 2, est destinée à être connectée à un moyen d'alimentation électrique non représenté sur les figures. Les éléments métalliques creux 13 à 15 sont enrobés dans la partie cylindrique allongée 6 du surmoulage 2 et les renfoncements 7 et 8 de ladite partie cylindrique allongée 6 du surmoulage 2 contiennent chacun l'une des deux extrémités de l'élément métallique creux 13 et la seconde extrémité de l'un des deux éléments métalliques creux 14 ou 15. Ces extrémités ne sont pas recouvertes par le surmoulage 2 et permettront, comme décrit ci-après, d'assurer la fixation des deux têtes d'allumage 16,17 dans le surmoulage 2.

Les deux têtes d'allumage 16, 17 sont strictement identiques l'une à l'autre et par conséquent seule l'une des deux têtes d'allumage 16, 17 sera décrite. Ainsi, la tête d'allumage 16 est, de façon classique, constituée à partir d'un socle 18 contenant un élément résistif chauffant sur lequel est déposé une charge thermosensible, cette dernière étant maintenue par un capuchon 24 fragmentable solidarisé au socle 18. Cette charge thermosensible se décompose avantageusement, d'une part, en une charge primaire à base de trinitrorésorcinate de plomb, et d'autre part, en une charge renforçatrice constituée par un mélange de poudre du type bore/nitrate de potassium et de poudre à simple base à la nitrocellulose. L'élément résistif chauffant est constitué par une bande résistive chauffante définie par un sous-circuit imprimé comme décrit dans le brevet US-A-5 544 585 ou dans son correspondant FR-A-2 704 944 dont la description est incluse, par référence, à la présente description.

Le socle 18 comporte une protubérance 19 qui est elle-même prolongée par deux tiges métalliques 20,21 conductrices. Ces deux tiges métalliques 20, 21 sont destinées à être insérées dans les deux éléments métalliques creux 13 et 14 dont les extrémités ouvertes sont contenues dans le renfoncement 7 de la partie cylindrique allongée 6, et la protubérance 19, de par sa géométrie particulière, est conçue pour s'emboîter parfaitement dans ledit renfoncement 7.

Cet initiateur 1 est donc particulièrement destiné à être intégré dans un générateur pyrotechnique de gaz tubulaire dont les chambres de combustion sont coaxiales.

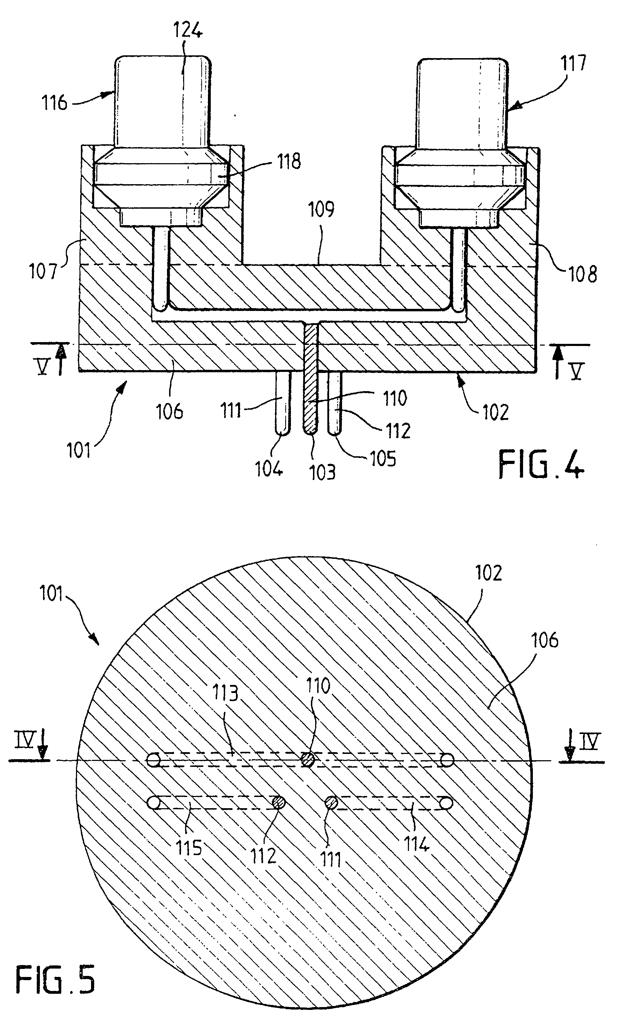

En se reportant aux figures 4 et 5, on observe qu'un autre initiateur 101 électro-pyrotechnique selon le premier mode de réalisation préférée est constitué à partir d'un surmoulage 102 monobloc en résine adhésive à base de polyamide thermofusible qui enrobe partiellement trois broches 103 à 105 constituant les trois connexions électriques dudit initiateur 101. Plus précisément, le surmoulage 102 présente, d'une part, une base 106 discoïde, et d'autre part, deux saillies cylindriques 107 et 108 laissant apparaître un renfoncement central 109.

Chacune des trois broches 103 à 105 se décompose respectivement en un tronçon métallique plein 110 à 112 et en un tronçon métallique creux 113 à 115. Dans le cas où ces tronçons sont des éléments distincts, chacun des deux éléments métalliques pleins 111 et 112 présente une extrémité supérieure soudée à une première extrémité de l'élément métallique creux 114, 115 qui lui correspond, et l'élément métallique plein 110 présente une extrémité supérieure soudée au corps de l'élément métallique creux 113. L'extrémité inférieure de chacun des trois éléments métalliques pleins 110 à 112, non incluse dans la base 106 discoïde du surmoulage 103, est destinée à être connectée à un moyen d'alimentation électrique non représenté sur les figures. Les éléments métalliques creux 113 à 115 sont enrobés dans la base 106 discoïde et les saillies cylindriques 107 et 108 contiennent chacun l'une des deux extrémités de l'élément métallique creux 113 et la seconde extrémité de l'un des deux éléments métalliques creux 114 ou 115. Ces extrémités ne sont pas recouvertes par le surmoulage 102 et permettent d'assurer la fixation des deux têtes d'allumage 116 et 117. Celles-ci sont strictement identiques aux deux têtes d'allumage décrites précédemment. En effet, la tête d'allumage 116, par exemple, comprend un socle 118 sur lequel est fixé un capuchon 124 fragmentable et contient un élément résistif chauffant ainsi qu'une charge thermosensible. Le socle 118 comporte une protubérance qui est elle-même prolongée par deux tiges métalliques conductrices. Celles-ci sont insérées dans les deux éléments métalliques creux 113 et 114 dont les extrémités ouvertes sont contenues dans la saillie cylindrique 107, et la protubérance est parfaitement imbriquée dans le décrochement externe cylindrique de la saillie cylindrique 107.

Cet initiateur 101 est plus particulièrement destiné à être intégré dans un générateur pyrotechnique de gaz dont les chambres de combustion ne sont pas coaxiales. En effet, le renfoncement central 109 du surmoulage 102 facilite l'utilisation d'un tel initiateur 101 dans un générateur dont les deux chambres de combustion sont séparées par une cloison puisque cette dernière peut être aisément encastrée dans le renfoncement 109 central. Chacune des deux chambres de combustion renferme alors l'une des deux têtes d'allumage 116 et 117.

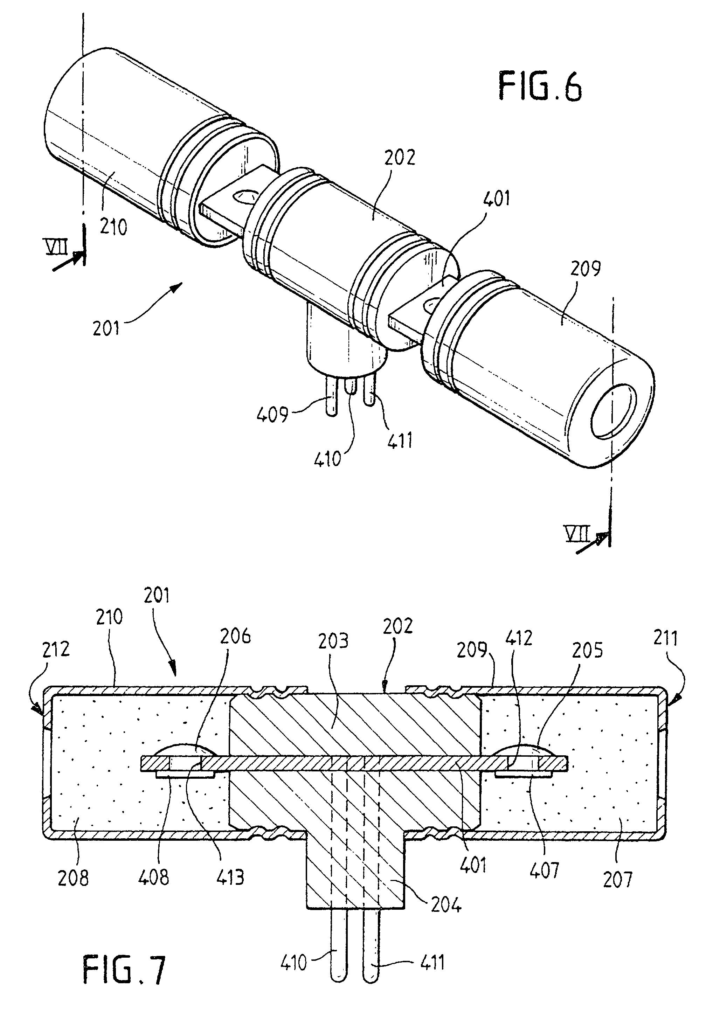

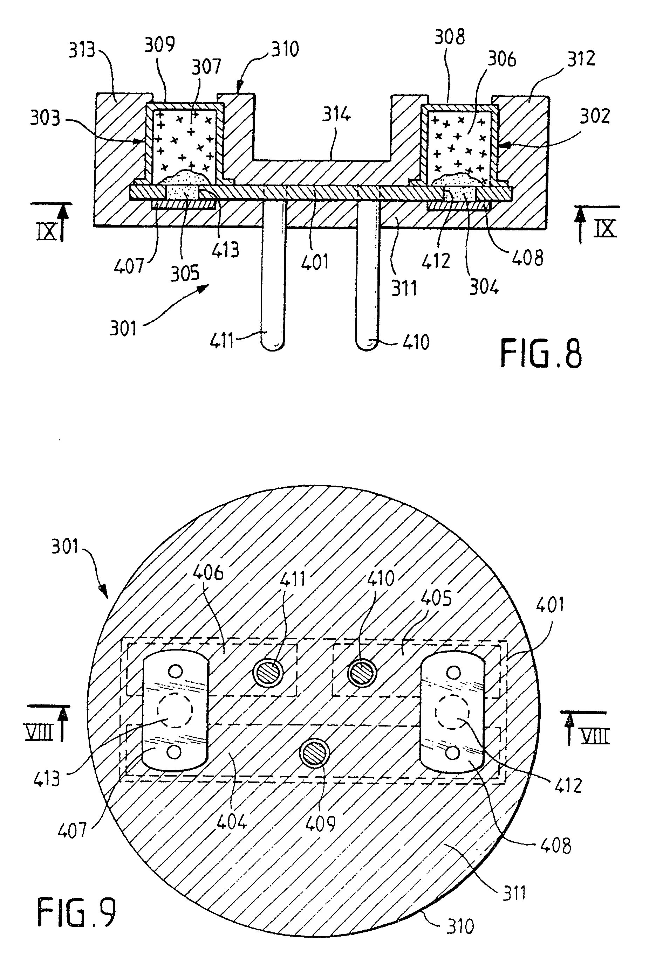

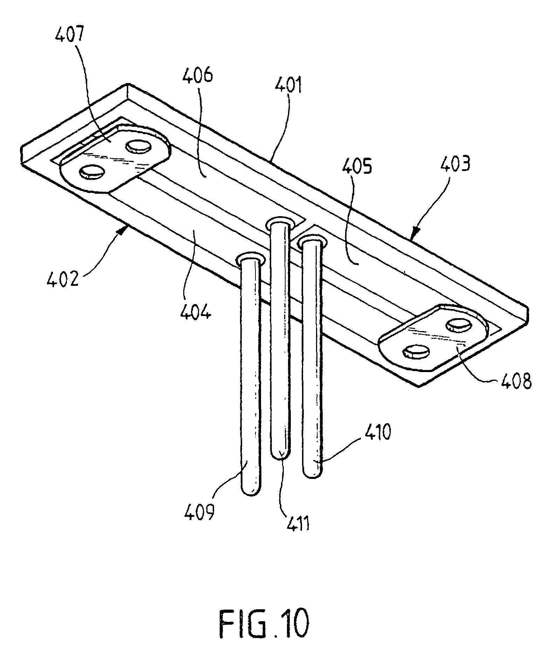

En se reportant aux figures 6,7 d'une part, et aux figures 8,9 d'autre part, on observe qu'un initiateur 201,301 électro-pyrotechnique selon le second mode de réalisation préférée de l'invention est constitué à partir d'un support 401 de circuit imprimé ayant la forme d'une carte parallépipédique mince. En se référant plus particulièrement à la figure 10, on observe que ce support 401, qui est en résine époxy chargée en fibres de verre, comprend une face inférieure 402 et une face supérieure 403. Trois bandes conductrices distinctes 404 à 406 de largeur identique et parallèles à la plus grande arête du support 401 sont imprimées sur la face inférieure 402, une première bande 404 étant de longueur légèrement inférieure à celle de la plus grande arête et les deux autres bandes 405 et 406 étant alignées. Chacune des deux bandes conductrices 405 et 406 est reliée à la bande conductrice 404 à l'aide d'un élément résistif chauffant 407, 408 dont la description a été faite précédemment. Chacune des trois bandes conductrices 404 à 406 est connectée par soudure à une broche 409 à 411 elle-même encastrée dans le support 401. La face inférieure 402 du support 401 est partiellement recouverte par une couche de vernis isolant, seules les zones du support 401 dans lesquelles, d'une part, les deux éléments résistifs chauffants 407, 408 sont fixés par collage, et d'autre part, les trois broches 404 à 406 sont encastrées, restant à découvert. Le support 401 comporte des orifices 412, 413 faisant face à chacun des deux éléments résistifs chauffants 407, 408.

En se reportant plus particulièrement aux figures 6 et 7, on constate que l'initiateur 201 est réalisé à partir d'un surmoulage 202 monobloc. Ce dernier présente, d'une part, une partie cylindrique allongée 203 qui enrobe le support 401 à l'exception des zones de fixation des deux éléments résistifs chauffants 407, 408, et d'autre part, un décrochement externe cylindrique 204 qui enrobe les trois broches 409 à 411 sur une partie de leur longueur. Deux têtes d'allumage 211 et 212 sont constituées à partir des deux orifices 412 et 413 qui sont chacun recouverts par une charge primaire 205, 206 elle-même plongée dans une charge renforçatrice 207, 208 contenue dans un capuchon 209, 210 fragmentable. Chaque extrémité ouverte des deux capuchons 209, 210 fragmentables est fixée, par exemple par sertissage, dans l'une des deux extrémités présentées par la partie cylindrique allongée 203 du surmoulage 202. Les compositions chimiques respectives des différentes charges employées sont identiques à celles décrites auparavant.

En se reportant plus particulièrement aux figures 8 et 9, on observe que l'initiateur 301 est constitué à partir d'un surmoulage 310 monobloc en résine adhésive à base de polyamide thermofusible qui enrobe totalement le support 401, les trois bandes conductrices 404 à 406 et les deux éléments résistifs chauffants 407, 408. Plus précisément, le surmoulage 310 présente, d'une part, une base discoïde 311, et d'autre part, deux saillies cylindriques 312 et 313 laissant apparaître un renfoncement central 314. La base discoïde 311 enrobe les trois broches 409 à 411 sur une partie de leur longueur et chacune des deux saillies cylindriques 312, 313 contient une tête d'allumage 302,303. Ces deux têtes d'allumage 302 et 303 sont constituées à partir des orifices 412 et 413 qui sont chacun recouverts par une charge thermosensible se décomposant, d'une part, en une charge primaire 304, 305, et d'autre part, en une charge renforçatrice 306, 307, les compositions chimiques de ces différentes charges étant par ailleurs identiques à celles décrites précédemment. Deux capuchons 308, 309 fragmentables, qui enserrent chacun l'une des deux charges thermosensibles, présentent une extrémité ouverte en appui contre le support 401 et sont chacun recouverts par la saillie cylindrique 312, 313 qui leur correspond.

## Revendications

1. Initiateur (1,101,201,301) électro-pyrotechnique, destiné à être incorporé dans un générateur pyrotechnique adaptatif et/ou progressif de gaz utilisé en sécurité automobile pour protéger un occupant, comportant deux têtes d'allumage (16 et 17, 116 et 117, 211 et 212, 302 et 303), **caractérisé en ce que**,
**i)** chacune des deux têtes d'allumage (16 et 17, 116 et 117, 211 et 212, 302 et 303) renferme une charge thermosensible et un élément résistif chauffant (407, 408),
**ii)** les deux éléments résistifs chauffants (407,408) sont incorporés dans un circuit électrique qui comporte trois connexions électriques, l'une étant commune aux deux éléments résistifs chauffants (407 et 408) et les deux autres étant chacune reliées à un seul des deux éléments résistifs chauffants (407,408),
**iii)** les trois connexions électriques sont connectées à un moyen d'alimentation électrique provenant d'un boîtier de commande.

2. Initiateur selon la revendication 1, **caractérisé en ce que** chacune des trois connexions électriques est constituée par une broche (3,4,5,409,410,411).

3. Initiateur selon la revendication 2, **caractérisé en ce que** le moyen d'alimentation électrique est constitué par un câble électrique contenant trois fils de liaison, chacune des trois broches (3,4,5,409,410,411) étant connectée à l'un des trois fils de liaison.

4. Initiateur selon la revendication 3, **caractérisé en ce que** les trois fils de liaison sont insérés dans une pièce intermédiaire venant s'emboîter dans les trois broches (3,4,5,409,410,411).

5. Initiateur selon l'une quelconque des revendications 2 à 4, **caractérisé en ce que** les deux éléments résistifs chauffants (407,408) sont reliés électriquement aux broches (3,4,5,409,410,411) par l'intermédiaire d'un moyen de transmission.

6. Initiateur selon la revendication 5, **caractérisé en ce que**,
**i)** chacune des trois broches (3,4,5) se décompose en un tronçon métallique plein (10,11,12) et en un tronçon métallique creux (13,14,15),
**ii)** un surmoulage (2) enrobe partiellement les trois broches (3,4,5),
**iii)** l'élément résistif chauffant contenu dans chacune des deux têtes d'allumage (16,17) est relié électriquement, par l'intermédiaire de deux tiges métalliques (20,21) conductrices qui prolongent ladite tête d'allumage, au tronçon métallique creux (13) de la broche (3) commune aux deux éléments résistifs chauffants et au tronçon métallique creux (14,15) de l'une des deux autres broches (4,5).

7. Initiateur selon la revendication 5, **caractérisé en ce que**,
**i)** le circuit électrique est intégré dans un circuit de trois bandes conductrices (404,405,406) qui sont formées sur un support (401) de circuit imprimé, chacune des trois bandes conductrices (404,405,406) étant connectée à l'une des trois broches (409,410,411),
**ii)** les deux éléments résistifs chauffants (407 et 408) sont fixés dans le support (401) de circuit imprimé de façon à ce que l'une des trois bandes conductrices soit commune aux deux éléments résistifs chauffants (407 et 408) et de façon à ce que les deux autres bandes conductrices (405 et 406) soient chacune reliées à un seul des deux éléments résistifs chauffants (407,408),
**iii)** chacun des deux éléments résistifs chauffants (407,408) est recouvert par la charge thermosensible qui lui correspond et qui est elle-même contenue dans un capuchon (209,210) fragmentable,
**iv)** les deux capuchons (209 et 210) fragmentables sont solidarisés à un surmoulage (202) qui enrobe partiellement les trois broches (409,410,411) et le support (401) de circuit imprimé.

8. Initiateur selon la revendication 7, **caractérisé en ce que** le circuit électrique est partiellement recouvert par une couche de vernis isolant.

9. Initiateur selon la revendication 1, **caractérisé en ce que** chacune des trois connexions électriques est constituée par un fil électrique.

## Patentansprüche

1. Elektro-pyrotechnischer Initialzünder (1, 101, 201, 301), der in einen adaptiven und/oder progressiven pyrotechnischen Gasgenerator eingebaut werden soll, welcher in der Fahrzeugsicherheit zum Schutz eines Insassen verwendet wird, mit zwei Zündköpfen (16 und 17, 116.und 117, 211 und 212, 302 und 303), **dadurch gekennzeichnet, daß**
**i)** jeder der beiden Zündköpfe (16 und 17, 116 und 117, 211 und 212, 302 und 303) eine wärmeempfindliche Ladung und ein Heizwiderstandselement (407, 408) umschließt,
ii) die beiden Heizwiderstandselemente (407, 408) in eine elektrische Schaltung eingebaut sind, die drei elektrische Verbindungen aufweist, von denen eine den beiden Heizwiderstandselementen (407 und 408) gemeinsam ist und die beiden anderen je mit einem einzigen der beiden Heizwiderstandselemente (4,07, 408) verbunden ist,
iii) die drei elektrischen Verbindungen mit einer von einem Steuergehäuse kommenden Stromzufuhreinrichtung verbunden sind.

2. Initialzünder nach Anspruch 1, **dadurch gekennzeichnet, daß** jede der drei elektrischen Verbindungen aus einem Kontaktstift (3, 4, 5, 409, 410, 411) besteht.

3. Initialzünder nach Anspruch 2, **dadurch gekennzeichnet, daß** das Stromzufuhrelement aus einem elektrischen Kabel besteht, das drei Verbindungsdrähte aufweist, wobei jeder der drei Kontaktstifte (3, 4, 5, 409, 410, 411) mit einem der drei Verbindungsdrähte verbunden ist.

4. Initialzünder nach Anspruch 3, **dadurch gekennzeichnet, daß** die drei Verbindungsdrähte in ein Zwischenteil eingefügt sind, das in die drei Kontaktstifte (3, 4, 5, 409, 410, 411) eingepaßt wird.

5. Initialzünder nach einem der Ansprüche 2 bis 4, **dadurch gekennzeichnet, daß** die beiden Heizwiderstandselemente (407, 408) über ein Übertragungsmittel elektrisch mit den Kontaktstiften (3, 4, 5, 409, 410, 411) verbunden sind.

6. Initialzünder nach Anspruch 5, **dadurch gekennzeichnet, daß**
i) jeder der drei Kontaktstifte (3, 4, 5) zusammengesetzt ist aus einem massiven metallischen Abschnitt (10, 11, 12) und einem hohlen metallischen Abschnitt (13, 14, 15),
ii) eine Übergußmasse (2) die drei Kontaktstifte (3, 4, 5) teilweise umhüllt,
iii) das in jedem der beiden Zündköpfe (16, 17) enthaltene Heizwiderstandselement elektrisch über zwei leitende Metallstangen (20, 21), die den Zündkopf verlängern, mit dem hohlen metallischen Abschnitt (13) des den beiden Heizwiderstandselementen gemeinsamen Kontaktstifts (3) und mit dem hohlen metallischen Abschnitt (14, 15) eines der anderen beiden Kontaktstifte (4, 5) verbunden ist.

7. Initialzünder nach Anspruch 5, **dadurch gekennzeichnet, daß**
i) die elektrische Schaltung in eine Schaltung von drei Leiterbahnen (404, 405, 406) integriert ist, die auf einer Leiterplatte (401) ausgebildet sind, wobei jede der drei Leiterbahnen (404, 405, 406) mit einem der drei Kontaktstifte (409, 410, 411) verbunden ist,
ii) die beiden Heizwiderstandselemente (407 und 408) in der Leiterplatte (401) so befestigt sind, daß eine der drei Leiterbahnen den beiden Heizwiderstandselementen (407 und 408) gemeinsam ist, und daß die beiden anderen Leiterbahnen (405 und 406) je mit nur einem der beiden Heizwiderstandselemente (407, 408) verbunden sind,
iii) jedes der beiden Heizwiderstandselemente (407, 408) von der wärmeempfindlichen Ladung bedeckt ist, die ihm entspricht und die selbst in einer zerbrechlichen Kappe (209, 210) enthalten ist,
iv) die beiden zerbrechlichen Kappen (209, 210) fest mit einer Übergußmasse (202) verbunden sind, die teilweise die drei Kontaktstifte (409, 410, 411) und die Leiterplatte (401) umhüllt.

8. Initialzünder nach Anspruch 7, **dadurch gekennzeichnet, daß** die elektrische Schaltung teilweise von einer Schicht aus Isolierlack bedeckt wird.

9. Initialzünder nach Anspruch 1, **dadurch gekennzeichnet, daß** jede der drei elektrischen Verbindungen aus einem Leitungsdraht besteht.

## Claims

1. Electro-pyrotechnic initiator (1,101,201,301) designed to be incorporated in an adaptive and/or progressive pyrotechnic gas generator used in automobile safety for protecting an occupant, comprising two ignition heads (16 and 17, 116 and 117, 211 and 212, 302 and 303) **characterized in that**,
i) each of the two ignition heads (16 and 17, 116 and 117, 211 and 212, 302 and 303) encloses a heat-sensitive charge and a heating resistance element (407,408),
ii) the two heating resistance elements (407,408) are incorporated in an electric circuit which comprises three electrical connections, one being common to the two heating resistance elements (407 and 408) and the other two being each connected to only one of the two heating resistance elements (407,408),
iii) the three electrical connections are connected to an electricity supply means coming from a control box.

2. Initiator according to claim 1, **characterized in that** each of the three electrical connections consists of a pin (3,4,5,409,410,411).

3. Initiator according to claim 2, **characterized in that** the electricity supply means consists of an electric cable containing three connecting wires, each of the three pins, (3,4,5,409,410,411), being connected to one of the three connecting wires.

4. Initiator according to claim 3, **characterized in that** the three connecting wires are inserted in an intermediate component fitting between the three pins (3,4,5,409,410,411).

5. Initiator according to any one of claims 2 to 4, **characterized in that** the two heating resistance elements (407,408) are electrically connected to the pins (3,4,5,409,410,411) via a means of transmission.

6. Initiator according to claim 5, **characterized in that**,
i) each of the three pins (3,4,5) is made up of a solid metal section (10,11,12) and a hollow metal section (13,14,15),
ii) an over moulding (2) partially covers the three pins (3,4,5),
iii) the heating resistance element contained in each of the three ignition heads (16,17) is electrically connected via two conducting metal rods (20,21) which extend the said ignition head, to the hollow metal section (13) of the pin (3) common to the two heating resistance elements and to the hollow metal section (14,15) of one of the other two pins (4,5).

7. Initiator according to claim 5, **characterized in that**,
i) the electric circuit is integrated within a circuit of three conducting strips (404,405,406) which are formed on a support (401) of a printed circuit, each of the three conducting strips (404,405,406) being connected to one of the three pins (409,410,411),
ii) the two heating resistance elements (407 and 408) are attached in the support (401) of the printed circuit so that one of the three conducting strips is common to the two heating resistance elements (407 and 408) and so that the other two conducting strips (405 and 406) are each connected to only one of the two heating resistance elements (407,408),
iii) each of the two heating resistance elements (407,408) is covered by the heat-sensitive charge corresponding to it and which is itself contained in a breakable cap (209,210),
iv) the two breakable caps (209 and 210) are secured to an over moulding (202) which partially encloses the three pins (409,410,411) and the support (401) of the printed circuit.

8. Initiator according to claim 7, **characterized in that** the electric circuit is partially covered by a layer of insulating varnish.

9. Initiator according to claim 1, **characterized in that** each of the three electrical connections consists of an electric wire.
